# EUROPÄISCHE PATENTSCHRIFT

(11) **EP 1 954 211 B1**
(45) Veröffentlichungstag und Bekanntmachung des Hinweises auf die Patenterteilung: **28.04.2010**
(21) Anmeldenummer: 06819597.3
(22) Anmeldetag: 20.11.2006
(51) Int. Cl.: A61C 13/00, A61C 13/09

(54) **VERFAHREN UND SYSTEM ZUM ERZEUGEN EINER DENTALEN PROTHESE**
METHOD AND SYSTEM FOR PRODUCING A DENTAL PROSTHESIS
PROCEDE ET SYSTEME DE FABRICATION D'UNE PROTHESE DENTAIRE

(30) Priorität: 22.11.2005 DE 102005055526
(43) Veröffentlichungstag der Anmeldung: 13.08.2008
(73) Patentinhaber: BEGO Bremer Goldschlägerei Wilh.-Herbst GmbH & Co KG, 28359 Bremen (DE)
(72) Erfinder: WIEST, Thomas, 36088 Hünfeld (DE); WEISS, Christoph, 28211 Bremen (DE); DIERKES, Stephan, 28357 Bremen (DE); LASCHÜTZA, Helmut, 27721 Ritterhude (DE)
(74) Vertreter: Eisenführ, Speiser & Partner
(86) Internationale Anmeldenummer: PCT/EP2006/068641
(87) Internationale Veröffentlichungsnummer: WO 2007/060142

(56) Entgegenhaltungen:
- EP-A- 1 568 335
- WO-A-2005/046502
- DE-A1- 19 944 130
- US-A1- 2005 023 710

## Beschreibung

Die Erfindung betrifft ein Verfahren zum Erzeugen einer dentalen Prothese mit oder bestehend aus einem Gerüst und einer Verblendung, insbesondere zum Erzeugen einer Krone, einer Brücke, eines Inlays oder eines Onlays. Die Erfindung betrifft zudem ein System zum Erzeugen einer dentalen Prothese mit oder bestehend aus einem Gerüst und einer Verblendung sowie ein entsprechendes Computerprogramm.

Mit einer dentalen Prothese beispielsweise einer Krone, kann ein beschädigter oder zerstörter Zahn ergänzt, ersetzt oder nachgebildet werden. Hierbei bestehen verschiedene Wahlmöglichkeiten bezüglich des Materials der Prothese.

Hinsichtlich einer Funktion kann ein Zahn (partiell oder vollständig) in ausreichender Weise durch eine metallische Prothese ergänzt oder ersetzt werden. Aus ästhetischen Gründen wird jedoch in vielen Fällen davon abgesehen, eine dentale Prothese im ganzen metallisch auszuführen.

Eine Steigerung bezüglich der Ästhetik (Transluzenz) aber vor allem der Biokompatibilität stellt eine Prothese aus einer Glaskeramik da. Bei diesem Material handelt es sich um eine sogenannte Presskeramik, weil der Herstellungsprozess das Pressen des geschmolzenen Glases in eine Form ist. Um farbliche Verläufe auf dieser Prothese zu erreichen, kann sie nachträglich noch mittels Pinsel bemalt werden. Der Einsatzbereich dieser Art der Vollkeramik ist jedoch auf Grund der niedrigen Festigkeit auf Kronen und maximal dreigliedrige Frontzahnbrücken begrenzt.

Die besten ästhetischen Ergebnisse erhält man jedoch, wenn man ein keramisches bzw. metallisches Gerüst mit einer Verblendung versieht. Diese Verblendung erfolgt zumindest teilweise. Das Gerüst bestimmt die wesentlichen mechanischen Eigenschaften wie Festigkeit und Biegesteifigkeit, während die optischen Eigenschaften und die allgemeinen Oberflächeneigenschaften der dentalen Prothese durch die Verblendung eingestellt werden. Als Materialien werden für die Verblendung in der Regel Kunststoff oder Keramik eingesetzt. Verblendkeramiken werden Verblendkunststoffen in vielen Fällen vorgezogen, da nur die ausgezeichneten mechanisch-physikalischen Werte wie Härte und Festigkeit von Keramik einen Langzeiteinsatz ermöglichen.

Bei der Verwendung von Verblendkeramik ist auf die Abstimmung der Wärmeausdehnungskoeffizienten (WAK) von Gerüstmaterial und Verblendmaterial zu achten. Weichen die WAK zu sehr voneinander ab, so kommt es zu Spannung. Dies kann zum Ablösen der oder zu Rissen in der Verblendung führen.

Vielfach wird das Verblendmaterial manuell, z.B. mit einem Pinsel, auf das Gerüst aufgetragen. Dabei werden bei der Verblendung eines Keramik- bzw. Metallgerüsts beispielsweise eine Dentinkernmasse, eine Transparenzmasse und eine Schneidmasse aufgeschichtet. Zusätzlich wird auf dem Metallgerüst zuvor noch eine Opakermasse aufgetragen. Das Aufbringen dieser Schichten und die dazugehörigen Brände sind zeitaufwändig und das Ergebnis kann abhängig von der (Kunst-)Fertigkeit des Bearbeiters von unterschiedlicher Qualität sein.

In DE 27 05 770 A1 wird vorgeschlagen, mittels Elektrophorese Verblendkeramik auf ein metallisches Gerüst aufzutragen. Durch die elektrophoretische Abscheidung lassen sich allerdings nur gleichmäßige Schichten erzeugen. Es gibt keine gestalterischen Möglichkeiten, die Außenkontur zu beeinflussen (abgesehen von der Schichtstärke). Daher kann auf eine manuelle Nacharbeit nicht verzichtet werden. Diese Methode eignet sich darüber hinaus auch nur für Metallgerüste, da die zu beschichtende Oberfläche elektrisch leitend sein muss.

Aus US 5,092,022 sind Verfahren zur Herstellung verblendeter metallkeramischer Kronen bekannt. Die Krone wird aus zueinander passenden vorgegebenen Bestandteilen (Gerüst und Verblendung) hergestellt, wobei die Außenkontur des Gerüstes und die Innenkontur der Verblendung standardisiert vorgegeben sind und nur die Innenkontur des Gerüstes und die Außenkontur der Verblendung mittels abtragenden Formens an den Einsatzzweck angepasst werden. Alternativ wird zunächst das Gerüst erstellt und die Innenkontur der Verblendung vor einem Zusammenbau passend zur Außenkontur des. Gerüstes bearbeitet. Zudem wird in US 5,092,022 vorgeschlagen, ein Gerüst in der gewünschten Form sowie eine die Außenkontur der Verblendung abbildende Außenform herzustellen, Gerüst und Außenform zu einer Gussform zu kombinieren und eine Kunststoff-Verblendung direkt auf dem Gerüst zu gießen.

Standardisierte, vorgegebene Formen lassen sich oft nur schwierig an die speziellen Gegebenheiten des Einzelfalls anpassen. Werden Gerüst und Verblendung durch maschinelles Bearbeiten wie in US 5,092,022 aufeinander angepasst, so müssen die Fertigungstoleranzen sehr gering sein, was nur mit entsprechend hohem Aufwand möglich ist. Zudem besteht die Gussform nach US 5,092,022 aus zumindest zwei Bestandteilen, wodurch bevorzugt an den Kontaktflächen zwischen den Formteilen Gießfehler auftreten, die eine erweiterte Nacharbeitung notwendig machen.

Es ist bekannt, manuell ein Wachsmodell eines Verblendkeramikaufbaus zu modellieren, das Modell zusammen mit dem Gerüst einzubetten, das Wachsmodell anschließend auszubrennen und die derart erzeugte Form mit einer Keramik, beispielsweise mit einer Presskeramik aufzufüllen, um so die Prothese zu fertigen (siehe G.G.J Dröge: "Die Metallgerüst-Konstruktion für das Heißpressverfahren" das dental-labor, Heft 3/1977, G.G.J. Dröge: "Die Porzellan-Press-Technik (1)", das dental-labor, Heft 4/1969 und E.R. McPhee: "Heißpressverfahren bei der Porzellan/Metall-Aufbrenntechnik", das dental-labor, Heft 10/1976).

Das als "Wachsausschmelzguss" oder "lost-wax"-Verfahren bezeichnete Verfahren wird beispielsweise nach DE 199 29 441 A1 zur Herstellung vollanatomisch modellierter Kronen oder teilanatomisch modellierter Gerüste verwendet.

Aus EP 0 033 492 A1 ist ein Verfahren zur Herstellung eines Gießmodells aus Wachs für ein Primärteil einer Teleskopkrone bekannt, bei der die Kontur des Gießmodells auf Basis gespeicherter geometrischer Daten eines Zahnstumpfes errechnet und abtragend geformt wird.

WO 03/017864 A1 lehrt ein Verfahren zur Herstellung einer Vollgussprothese aus Metall, bei dem geometrische Daten eines Gebisses dazu verwendet werden, automatisiert einen Prototypen der zu formenden Prothese herzustellen, der im "lost-wax"-Verfahren zum Erzeugen einer Gussform für die ganze Prothese dient.

Mit den aus EP 0 033 492 A1 und WO 03/017864 A1 bekannten Verfahren lassen sich nur einteilige Prothese aus jeweils einem einzigen Material herstellen, nicht jedoch eine dentale Prothese mit einem Gerüst und einer Verblendung.

Ein Verfahren zur Herstellung einer dentalen Prothese mit einem Gerüst und einer Verblendung ist aus DE 199 22 870 A1 bekannt. Das manuelle Auftragen von Verblendmaterial wird hierbei durch ein computerunterstütztes, automatisiertes Auftragen unter Einsatz von Beschichtungsdüsen ersetzt. Dieses Verfahren erfordert jedoch einen komplexen Vorrichtungsaufbau und lässt sich daher in der Praxis kaum sinnvoll einsetzen.

WO 2005/046502 A1 betrifft ein System und eine Anordnung zur Herstellung einer Zahnersatzkomponente. Das System arbeitet vollautomatisch unter Verwendung dreidimensionaler Geometriedaten der Gesaintrestauration umfassend Gerüst und Verblendung, nicht jedoch auf Basis dreidimensionaler Geometriedaten der Verblendung.

EP 1568 335 offenbart ein Verfahren zur Herstellung einer Zahnersatz komponente, wobei die 3D-Geometriedaten einer Verblendung definiert werden.

Gemäß EP 1 543 797 A1 wird ähnlich zur Lehre von US 5,092,022 eine zum Verpressen von Verblendmaterial vorgesehene Form auf Basis eines Geometriedatensatzes der zu erzeugenden Prothese durch Fräsen oder Schleifen erzeugt.

Die Form nimmt das zu verblendende Gerüst auf und der verbleibende Hohlraum wird mit der Verblendkeramik durch Einpressen gefüllt.

Mehrteilige Guss- oder Pressformen führen an den Kontaktflächen der Formteile leicht zu Gussfehlern, insbesondere können Grate oder Gussfahnen auftreten. Komplizierte Formen bedingen unter Umständen eine weitere Aufteilung der Form, da ansonsten die Werkzeuge zur Bearbeitung der Form schwer zugänglicher Stellen wie einen Hinterschnitt nicht erreichen können.

Eine Aufgabe der Erfindung ist es, ein Verfahren und ein System zum Erzeugen einer dentalen Prothese mit einem Gerüst und einer Verblendung sowie ein entsprechendes Computerprogramm anzugeben, bei dem die oben angeführten Probleme vermieden oder verringert werden.

Insbesondere soll die dentale Prothese in einer gewünschten Form weitgehend unabhängig von der manuellen Fertigkeit des Bearbeiters in kurzer Zeit und gleichmäßiger Qualität hergestellt werden können. Sofern die gewünschte Form bereits der einsatzbereiten Form entspricht, kann auf umfangreiche Nacharbeiten zur Behebung von Herstellungsfehlern oder zur Anpassung an den Einsatzort im Gebiss weitgehend verzichtet werden.

Die dentale Prothese kann beispielsweise nur aus dem Gerüst und der Verblendung bestehen. Es kann allerdings auch vorgesehen sein, dass die dentale Prothese neben dem Gerüst und der Verblendung noch weitere Elemente aufweist.

Erfindungsgemäß wird ein Aspekt der obigen Aufgabe durch ein Verfahren zum Erzeugen einer dentalen Prothese mit einem Gerüst und einer Verblendung, insbesondere einer Krone, einer Brücke, eines Inlays oder eines Onlays, gelöst, das die folgenden Schritte aufweist:
Vorgeben dreidimensionaler Geometriedaten der Verblendung,
Bereitstellen oder Herstellen des Gerüstes,
Erzeugen eines Modells der Verblendung auf Basis der dreidimensionalen Geometriedaten der Verblendung, auf dem Gerüst oder separat,
Bilden einer Negativform der Verblendung durch Einschließen des Modells zwischen dem Gerüst und einem Formmaterial und anschließendes Entfernen des Modells, und
Füllen der Negativform mit Verblendmaterial zur Herstellung der verblendeten dentalen Prothese.

Die dreidimensionalen Geometriedaten der Verblendung definieren erfindungsgemäß deren Geometrie vollständig. Das auf Basis der dreidimensionalen Geometriedaten erzeugte Modell der Verblendung kann von der Verblendung selbst jedoch z. B. hinsichtlich der Innenkontur abweichen, um beispielsweise Raum zu lassen für Schichten, die zwischen Gerüst und Modell der Verblendung vorzusehen sind, z. B. Adhäsiv- und/oder Liner- bzw. Opakerschichten.

Sofern das Modell der Verblendung in seiner Innenkontur von der (später herzustellenden) Verblendung (deren dreidimensionale Geometriedaten vorgegeben sind) abweicht, wird bei Bilden der Negativform ein Spalt oder eine zusätzliche Schicht zwischen Gerüst und Modell vorgesehen, z. B. eine Opakerschicht. Das Modell wird vorzugsweise manuell, bevorzugt unter Verwendung eines Artikulators, auf das Gerüst aufgesetzt.

Ein weiterer Aspekt der obigen Aufgabe wird erfindungsgemäß gelöst durch ein System zum Erzeugen einer dentalen Prothese mit einem Gerüst und einer Verblendung, insbesondere einer Krone, einer Brücke, eines Inlays oder eines Onlays, mit:
einem Vorgabemittel zum Vorgeben dreidimensionaler Geometriedaten der Verblendung,
einem Gerüstvorbereitungsmittel zum Bereitstellen oder Herstellen des Gerüstes,
einem Modellerzeugungsmittel zum Erzeugen eines Modells der Verblendung auf Basis der dreidimensionalen Geometriedaten der Verblendung, auf dem Gerüst oder separat, und
einem Füllungsmittel zum Füllen einer durch Einschließen des Modells zwischen dem Gerüst und einem Formmaterial und anschließendes Entfernen des Modells gebildeten Negativform mit Verblendmaterial zur Herstellung der verblendeten dentalen Prothese.

Ein weiterer Aspekt der Erfindung betrifft ein Computerprogramm mit Computerprogrammcode, der ein Computersystem zum Erzeugen einer dentalen Prothese mit einem Gerüst und einer Verblendung veranlasst, ein erfindungsgemäßes Verfahren auszuführen, wenn das Computerprogramm auf dem Computersystem ausgeführt wird.

Neben dem Aufschichten der Verblendkeramik von Hand hat sich in der Dentalpraxis nur das Aufpressen von Verblendkeramik etabliert. Dabei ist das Aufpressen der Verblendkeramik bislang zwar die weniger ästhetische aber deutlich kostengünstigere Lösung. Diese kostengünstigere Lösung wird mit der vorliegenden Erfindung weiter verbessert. Dabei erfolgt die Erzeugung des Modells für die Verblendung auf Basis dreidimensionaler Geometriedaten des Verblendung, vorzugsweise mittels CAD/CAM.

Vorzugsweise erfolgt das Erzeugen des Modells der Verblendung nicht auf dem Modell, sondern separat, vorzugsweise mittels eines Freiformverfahrens (Rapid-Prototyping-Verfahrens).

In einer bevorzugten Ausgestaltung weist das erfindungsgemäße Verfahren als zusätzlichen Schritt ein aufbauendes und/oder abtragendes Formen des Gerüstes mittels computerunterstützter Fertigung auf, vorzugsweise mittels eines Rapid-Prototyping-Verfahrens. Die Integration der Herstellung und/oder Anpassung des Gerüstes in das Verfahren erlaubt das Erzeugen der dentalen Prothese als Ganzes unabhängig von vorbearbeiteten Eingangsprodukten wie beispielsweise einem nachzubearbeitenden Rohgerüst, was eine Zeit- und Arbeitsersparnis bedeuten kann.

In einer weiteren Ausgestaltung des erfindungsgemäßen Verfahrens wird das Gerüst auf Basis vorbestimmter dreidimensionaler Geometriedaten geformt. Das Gerüst wird in einer zumindest teilweise durch die dreidimensionalen Geometriedaten bestimmten Form bzw. mit einer entsprechenden Kontur erzeugt. Das Formen des Gerüstes muss hierbei nicht darauf beschränkt sein, das Gerüst mit einer vorbestimmten Schichtdicke als einem Beispiel eines eindimensionalen Geometriedatums beispielweise auf einem Modell des Zahnstumpfes zu formen. Vorteilhafterweise kann das Gerüst in seiner kompletten Form-vorbestimmt werden, wobei insbesondere spezielle Eigenarten des jeweiligen Falles beachtet und einbezogen werden können. So können beispielsweise anatomische Formen des Gerüsts erzeugt werden.

In einer weiteren Ausgestaltung der Erfindung umfasst das Gerüst ein Metall, eine Metalllegierung und/oder ein Keramikmaterial oder besteht daraus. Metalle und Metalllegierungen eignen sich aufgrund ihrer mechanischen Eigenschaften gut, einen Zahn bzw. ein Zahnteil funktionell zu ersetzen. In funktioneller Hinsicht zahnähnliche Eigenschaften lassen sich auch mit geeigneten Keramiken erreichen. Durch den Einsatz der geeigneten Materialien für das Gerüst können die mechanischen Eigenschaften der ganzen Prothese weitgehend vorgegeben werden.

In einer bevorzugten Ausgestaltung des erfindungsgemäßen Verfahrens werden zum Vorgeben der dreidimensionalen Geometriedaten der Verblendung Benutzereingaben und/oder dreidimensionale Geometriedaten des Gerüstes, der zu erzeugenden Prothese, eines Gebisses und/oder eines Zahnstumpfes verwendet, insbesondere dreidimensionale Geometriedaten des Gerüstes und eines Gebisses. In besonders einfacher Weise kann aus der Außenkontur des Gerüstes und den geometrischen Daten des Gegengebisses eine wünschenswerte Kontur der Verblendung berechnet werden. Beim Vorgeben der Geometriedaten der Verblendung kann jedoch auch die Geometrie des Zahnstumpfes, auf den die Prothese aufgesetzt werden soll, berücksichtigt werden. Dies kann beispielsweise auch im Hinblick auf mechanische Eigenschaften der Gesamt-Prothese geschehen. Auch die weiteren Geometriedaten des Gebisses oder Teilgebisses, in das die Prothese eingesetzt werden soll, können berücksichtigt werden, um Nacharbeiten möglichst weitgehend unnötig zu machen. Im Einzelfall ist es zudem sinnvoll, dem Benutzer die Möglichkeit zu geben, auf die Vorgabe der Geometriedaten der Verblendung oder auf die Geometriedaten selbst Einfluss zu nehmen.

In einer vorteilhaften Ausgestaltung umfasst das erfindungsgemäße Verfahren ein Erfassen dreidimensionaler Geometriedaten des Gerüstes, eines Gebisses und/oder eines Zahnstumpfes. Das Erfassen der dreidimensionalen Geometriedaten erlaubt es, unnötige Fehlerquellen auszuschalten, so kann es beispielsweise beim Erfassen nicht mehr vorkommen, dass Geometriedaten durch eine fehlerhafte Datenübertragung verfälscht werden oder dass durch eine Verwechslung durch einen Bediener zu einer anderen Prothese gehörige Geometriedaten verwendet werden. Werden die dreidimensionalen Geometriedaten des jeweiligen Patientengebisses erfasst, können wahlweise bei der Vorgabe der Geometriedaten der Verblendung oder des Gerüstes standardisierte Werte oder eben die im Einzelfall bestimmten Werte benutzt werden.

Erfasste und/oder vorgegebene dreidimensionale Geometriedaten werden vorzugsweise gespeichert, was eine spätere Überprüfung der Verfahrensschritte und -zwischenergebnisse oder eine statistische Auswertung ermöglicht.

In einer weiteren Ausgestaltung des erfindungsgemäßen Verfahrens erfolgt das Erzeugen des Modells des Verblendung computerunterstützt, bevorzugt mittels eines Rapid-Prototyping-Verfahrens, insbesondere mittels Fräsen, 3D-Printen und/oder Stereolithographie, und zwar insbesondere dann, wenn das Modell nicht auf dem Gerüst, sondern separat erzeugt wird. Liegen die vorgegebenen dreidimensionalen Geometriedaten der Verblendung im Computer vor, so können diese auf einfache Weise dazu eingesetzt werden, dass das Modell in gewünschter Weise erzeugt wird. Hiermit werden Fehlerquellen durch eine manuelle Bearbeitung vermieden.

Liegen keine Daten des Gegenbisses vor, so kann das Modell der Verblendung auch zunächst größer gestaltet werden als erforderlich. Der Zahntechniker wird dann beispielsweise das verblendete Gerüst in einen Artikulator setzen und die überschüssiges Verblendmaterial durch Schleifen oder Fräsen entfernen.

Um eine höhere Ästhetik zu erzielen, kann eine Prothese, bei der lediglich eine farblich einheitliche Verblendkeramikschicht aufgebracht wurde, anschließend mit Farben noch modifiziert werden.

In einer vorteilhaften Ausgestaltung wird bei der Füllung der Negativform ein Farbverlauf in der Verblendung eingestellt, insbesondere durch Verpressen eines Rohlings mit einem Farbverlauf. Auch wenn der Farbverlauf des Rohlings infolge des Einbringens in die Negativform und des Verpressens modifiziert wird, kann mit einer geeigneten Erstellung des Rohlings ein gewünschter Farbverlauf in der Verblendung erreicht werden.

In einer vorteilhaften Ausgestaltung wird bereits bei der Erzeugung des Modells für die Verblendung berücksichtigt, dass auf diese noch weitere Schichten aufgetragen werden sollen. Diese Vorgehensweise kann zu einer Erhöhung der Ästhetik der Prothese führen. Dabei kann es sich bei der Verblendung um eine Verblendung auf Basis von Dentinkernmasse handeln. Weitere Schichten wie zum Beispiel auf Basis von Transparentmasse und Schneidmasse können dann in nachfolgenden Schritten manuell aufgeschichtet werden oder ebenfalls (wie auch schon die Verblendung) durch Aufpressen erzeugt werden; im letztgenannten Fall werden mehrere Schichten/Verblendungen nacheinander appliziert. Ein Gerüst mit einer darauf befindlichen Verblendung kann hierbei wie ein einfaches Gerüst ohne Verblendung entsprechend der vorliegenden Erfindung mit einer (weiteren) Verblendung versehen werden.

Auch zuvor größer erzeugte Verblendungen auf Basis von Dentinmasse können von der Prothese heruntergeschleift oder gefräst werden, so dass sich Platz für nachfolgende Schichten ergibt.

In einer vorteilhaften Ausgestaltung des erfindungsgemäßen Verfahrens wird an das Modell der Verblendung zusätzlich eine Positivform für wenigstens eine das Füllen der Negativform und/oder das Entfernen des Modells erleichternde Leitung angesetzt, insbesondere für einen Gusskanal oder Einpresskanal. Das Ansetzen der Positivform erleichtert die spätere Verwendung des Modells. Es besteht die Möglichkeit, die Positivform bzw. deren Geometriedaten in die Erzeugung des Modells mit einzubeziehen. Alternativ kann die Positivform in geeigneter Weise auch nach dem Erzeugen des Modells an dieses angesetzt werden.

In einer weiteren Ausgestaltung des erfindungsgemäßen Verfahrens weist das erzeugte Modell der Verblendung eine geschlossene Außenfläche und auf der dem Gerüst zugewandten Seite Hohlräume auf. Ein derartiges Modell gibt die für das Bilden der Negativform der Verblendung wesentliche Außenkontur der Verblendung wieder, während im Innenbereich bzw. auf der dem Gerüst zugewandten Seite Aussparungen vorliegen, die eine Materialersparnis erlauben. Zudem wird durch die Hohlräume eine Entfernung des Modellmaterials etwa durch Ausschmelzen oder Ausbrennen erleichtert. Es ist hierbei auch möglich, dass das Modell nur an seinem unteren Rand am Gerüst anliegt und im Innenbereich, also zwischen Modell und Gerüst, auf eine genaue Passung des Modells verzichtet wird, ohne dass es zu einem Spalt zwischen Modell und Gerüst kommt, durch den etwa Einbettmasse eindringen könnte.

In einer vorteilhaften Ausgestaltung des erfindungsgemäßen Verfahrens umfasst das Entfernen des Modells der Verblendung ein Ausbrennen und/oder Ausschmelzen des Modells der Verblendung, wobei das Formmaterial ein feuerfestes Material ist, insbesondere eine (im Dentalbereich übliche) Einbettmasse. Ein Ausbrennen oder ein Ausschmelzen, also eine Einstellung geeigneter erhöhter Temperaturen und/oder Umgebungsbedingungen zur Veränderung des Aggregatzustandes und/oder der chemischen Zusammensetzung, stellt jeweils eine einfache und effektive Möglichkeit dar, das Material des Modells der Verblendung aus der Form zu entfernen und die Form somit für ein Füllen mit Verblendmaterial vorzubereiten. Hierbei verhält sich das Formmaterial selbst möglichst inert oder verändert seine Zusammensetzung oder Geometrie nur in kontrollierter Weise. Das gleiche gilt vorzugsweise für das Gerüst. Dabei werden die Materialien beispielsweise hinsichtlich ihrer Wärmeausdehnung aneinander angepasst. Vorzugsweise wird eine phosphatgebundene Einbettmasse eingesetzt. Bei diesen Einbettmassen wird die thermische Dehnung durch den so genannten Quarz- und den Cristobalitsprung eingestellt.

In einer bevorzugten Ausgestaltung des erfindungsgemäßen Verfahrens ist das Modell der Verblendung rückstandsfrei verbrennbar und/oder rückstandsfrei ausschmelzbar und wird insbesondere aus einem Wachs und/oder einem Kunststoff erzeugt. Wird durch das Ausbrennen und/oder Ausschmelzen das Material bereits rückstandsfrei aus der Form entfernt, so kann auf zusätzliche Arbeitsschritte zur Reinigung der Form, etwa durch ein Spülen mit einem geeigneten Lösungsmittel verzichtet werden.

Als Modellmaterialien werden vorzugsweise Wachse und Kunststoffe, insbesondere lichtaushärtendes Harz und lichtaushärtbarer Wachs, verwendet.

Neben oder alternativ zu dem Ausschmelzen des Modellmaterials kann auch eine Sublimation des Modellmaterials bei der Entfernung auftreten.

Das Austreiben des Modellmaterials aus der Form kann zudem dadurch erreicht werden, dass die dazu nötige Wärme mit dem Füllmaterial, beispielsweise beim Heißpressen, in die Form eingebracht wird.

In einer vorteilhaften Ausgestaltung des erfindungsgemäßen Verfahrens wird die Negativform mit einem einpressfähigen, vorzugsweise fließfähigen Verblendkeramikmaterial gefüllt, insbesondere mittels eines Heißpressverfahrens (Presstemperatur: -900°C). Eine Verblendung aus Glaskeramik ist besonders geeignet, der dentalen Prothese ein zahnähnliches Aussehen zu verleihen. Gegenüber der Möglichkeit, Kunststoff zu verwenden, bietet der Einsatz von Keramik u.a. die Vorteile besserer Verträglichkeit, Stabilität, Festigkeit und Lebensdauer.

Ein alternatives Verfahren ist der Schlickerguss. Hierbei wird der Hohlraum mit einem Schlicker, der ein Dispersionsmittel und Glas- und/oder Verblendkeramikpartikel enthält, gefüllt, um einen Grünkörper der Verblendung herzustellen.

Zudem ist es möglich, einen Rohling ähnlich zum Heißpressen in die Form zu pressen, wobei der Rohling einen Binder (z.B. Wachs oder einen Kunststoff/Thermoplast) und Glas- und/oder Verblendkeramikpartikel aufweist, um einen Grünkörper herzustellen. Im Gegensatz zum eigentlichen Heißpressen liegt hierbei die Temperatur deutlich geringer, im allgemeinen etwa im Bereich von 50°C bis 150°C.

Der derart erzeugte Grünkörper wird dann zusammen mit dem Gerüst thermisch behandelt, damit es zu einem Schmelzen bzw. Sintern und einer entsprechenden Verfestigung kommt. Hierbei ist allerdings zu beachten, dass ein Volumenverlust auftreten kann, der vorab bei der Bestimmung der Außenkontur zu beachten ist.

In einer weiteren vorteilhaften Ausgestaltung ist das erfindungsgemäße Verfahren zum Erzeugen und Verwenden eines mehrstückigen Modells und/oder zum Erzeugen einer mehrstückigen dentalen Prothese ausgestaltet. Ein mehrstückiges Modell ist beispielsweise vorteilhaft, wenn das Modell getrennt vom Gerüst erzeugt wird und ein einstückiges Modell nicht auf das Gerüst aufgesetzt werden kann.

In einer besonders bevorzugten Ausgestaltung umfasst das erfindungsgemäße Verfahren zum Erzeugen einer dentalen Prothese mit einem Gerüst und einer Verblendung, insbesondere einer Krone, einer Brücke, eines Inlays oder eines Onlays, die Schritte:
Aufbauendes und/oder abtragendes Formen des Gerüstes mittels computerunterstützter Fertigung unter Verwendung vorbestimmter dreidimensionaler Geometriedaten des Gerüstes,
Vorgeben dreidimensionaler Geometriedaten der Verblendung unter Verwendung der dreidimensionalen Geometriedaten des Gerüstes, insbesondere unter zusätzlicher Verwendung von Benutzereingaben und/oder vorbestimmten dreidimensionalen Geometriedaten eines Gebisses, in das die dentale Prothese eingesetzt werden soll,
Computerunterstützes Erzeugen eines Modells der Verblendung auf Basis der dreidimensionalen Geometriedaten der Verblendung, auf dem Gerüst oder separat,
Bilden einer Negativform der Verblendung durch Einschließen des Modells zwischen dem Gerüst und einem Formmaterial und anschließendes Ausschmelzen und/oder Ausbrennen des Modells, und
Füllen der Negativform mit einer Presskeramik zur Herstellung der verblendeten dentalen Prothese.

Bei metallischen Gerüsten kann es sinnvoll sein, dass vor dem Aufsetzen des Modells das Gerüst noch speziell vorbereitet wird. Dabei werden Gerüste aus Edelmetall- oder Nichtedelmetall zum Beispiel durch Sandstrahlen und Oxidationsglühen vorbereitet, so dass Haftoxide für den Verbund an der Oberfläche entstehen. Um störende Grautöne eines Metallgerüsts abzudecken, kann auch eine spezielle Grundmasse (Opaker) aufgetragen werden.

Beim Keramikgerüst kann dagegen ein Liner dünn aufgetragen werden. Dieser soll jedoch nicht abdecken, sondern dem Gerüst eine gewisse Grundfarbe geben.

Es wurde gefunden, dass diese Kombination der Verfahrensschritte ein besonders effektives Erzeugen dentaler, verblendeter Prothesen erlaubt.

Im folgenden wird die Erfindung unter Bezug auf die beiliegenden Figuren näher erläutert:
- Fig. 1 - Fig. 9: zeigen schematisch im Querschnitt Zwischenergebnisse der Erzeugung einer dentalen Prothese entsprechend der Erfindung.
- Fig. 10: zeigt im Fließbild eine erste Ausführungsform des-erfindungs-gemäßen Verfahrens zum Erzeugen einer dentalen Prothese.
- Fig. 11: zeigt im Fließbild eine zweite Ausführungsform des erfindungs-gemäßen Verfahrens zum Erzeugen einer dentalen Prothese.
- Fig. 12: zeigt im Fließbild eine dritte Ausführungsform des erfindungs-gemäßen Verfahrens zum Erzeugen einer dentalen Prothese.
- Fig. 13: zeigt schematisch eine erste Ausführungsform des erfindungs-gemäßen Systems zum Erzeugen einer dentalen Prothese.
- Fig. 14: zeigt schematisch eine zweite Ausführungsform des erfindungsgemäßen Systems zum Erzeugen einer dentalen Prothese.

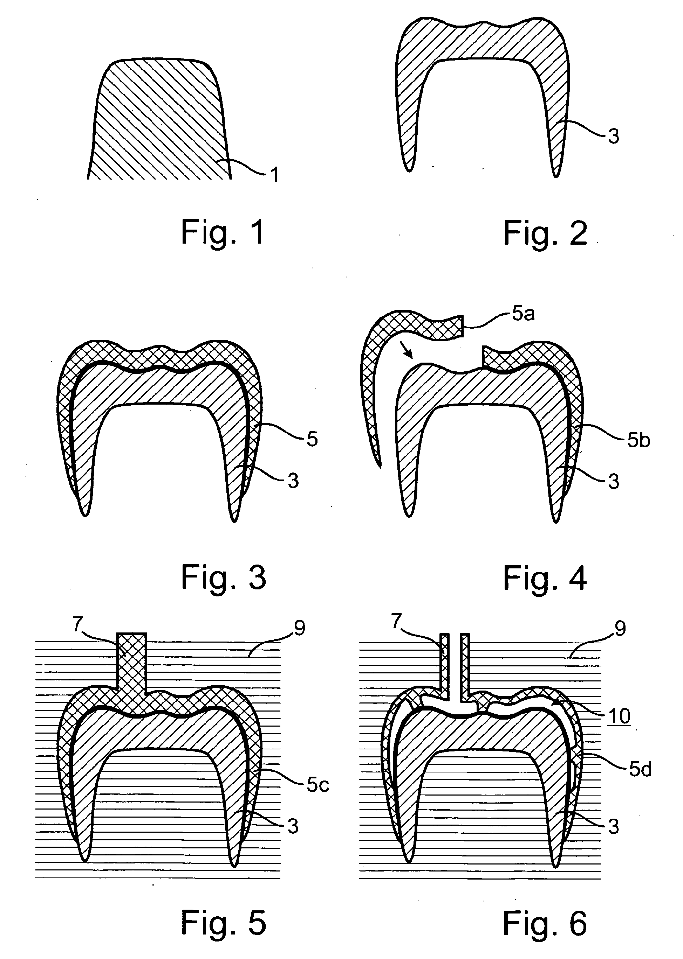

Fig. 1 zeigt einen Zahnstumpf bzw. das Modell eines Zahnstumpfes 1. Von Bedeutung sind hierbei insbesondere die geometrischen Daten der Außenkontur des Zahnstumpfes, an die die Innenkontur des Gerüstes (siehe Fig. 2) angepasst wird.

Fig. 2 zeigt ein Gerüst 3 mit einer an die Außenkontur des Zahnstumpfes 1 angepassten Innenkontur. Das Gerüst 3 weist wiederum eine Außenkontur auf, zu der passend die Innenkontur der Verblendung zu bestimmen ist.

Fig. 3 zeigt eine erste Ausführungsform eines Gerüstes 3 mit einem darauf befindlichen. Modell 5 einer Verblendung. Das Modell 5 ist auf Basis der dreidimensionalen Geometriedaten des Gerüstes 3 direkt auf dem Gerüst 3 selbst oder separat erzeugt und weist eine der angestrebten dentalen Prothese entsprechende Außenkontur auf.

Fig. 4 zeigt eine zweite Ausführungsform einer Kombination aus Gerüst 3 und Modell. Das Modell besteht aus zwei Modellteilen 5a, 5b, die getrennt vom Gerüst 3 erzeugt wurden und auf das Gerüst 3 aufgesetzt werden. Das Aufsetzen eines separat erzeugen Modells auf ein Gerüst erfolgt im Rahmen der vorliegenden Erfindung vorzugsweise manuell unter Verwendung eines Artikulators, insbesondere dann, wenn die Innenkontur des Modells der Außenkontur des Gerüstes nicht entspricht (siehe dazu oben).

Fig. 5 zeigt eine dritte Ausführungsform einer Kombination aus Gerüst 3 und Modell 5c. Das Modell 5c entspricht dem Modell 5 aus Fig. 3, wobei zusätzlich eine Positivform 7 eines Gusskanals an das Modell 5c angesetzt ist. Das Modell 5c ist gemeinsam mit dem Gerüst 3 in einer feuerfesten Einbettmasse 9 eingebettet.

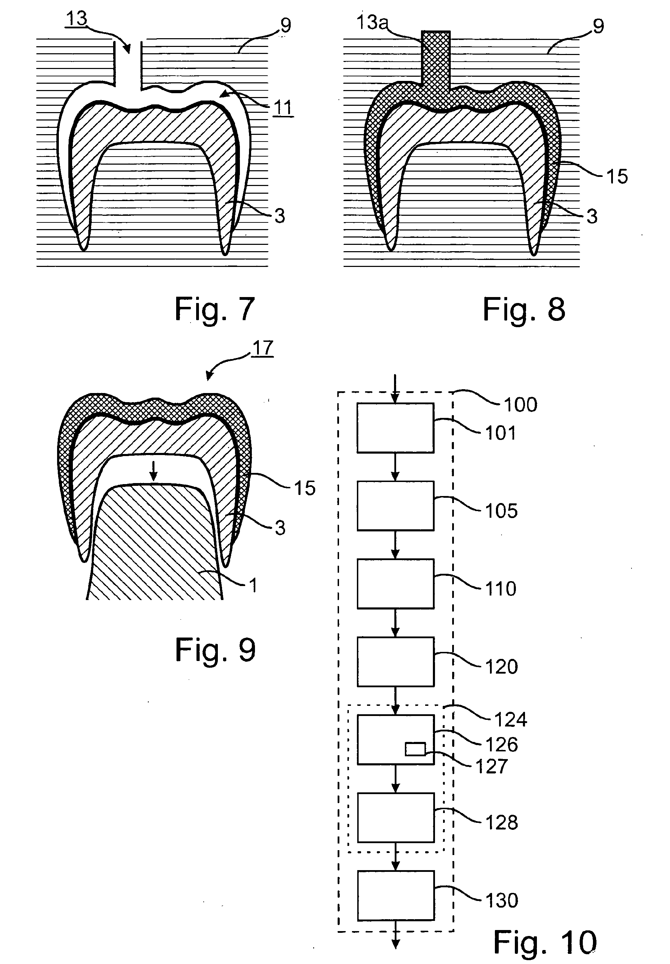

Fig. 6 zeigt eine vierte Ausführungsform einer Kombination aus Gerüst 3 und Modell 5d. Das Modell 5d ist gemeinsam mit dem Gerüst 3 wie auch in Fig. 5 dargestellt in einer feuerfesten Einbettmasse 9 eingebettet und weist eine Positivform 7 für einen Gusskanal auf. Das Modell 5d besitzt auf seiner vom dem Gerüst 3 abgewandten Seite eine geschlossene Außenfläche (Außenkontur), während zum Gerüst 3 hin und im Inneren der Positivform 7 Hohlräume 10 vorhanden sind. Die Innenkontur des Modells 5d der herzustellenden Verblendung (vgl. Figuren 8 und 9, Bezugszeichen 15) ab. Die geschlossene Außenfläche des Modells 5d hindert die Einbettmasse 9 daran, in den für die Gussform vorgesehenen Raum einzudringen, während die Hohlräume 10 zur Materialersparnis dienen und eine vereinfachte Entfernung des Modellmaterials erlauben.

Fig. 7 zeigt die in den Figuren 5 und 6 dargestellte Einbettung des Gerüstes 3 in eine Einbettmasse 9, wobei das Modell 5c bzw. 5d entfernt ist. An der Stelle des Modells befindet sich eine Negativform 11 der Verblendung, die über einen Gusskanal 13 gefüllt werden kann.

Die Darstellung in Fig. 8 entspricht der Darstellung von Fig. 7, wobei die Negativform 11 der Verblendung mit Verblendmaterial 15 gefüllt ist. Der Gusskanal enthält ebenfalls Verblendmaterial 13a.

Fig. 9 zeigt die fertiggestellte dentale Prothese 17 mit dem Gerüst 3 und der Verblendung 15, die auf den Zahnstumpf 1 aufgesetzt wird. Der gefüllte Gusskanal 13a wurde zuvor von der Verblendung 15 entfern.

Fig. 10 zeigt im Fließbild eine erste Ausführungsform des erfindungsgemäßen Verfahrens zum Erzeugen einer dentalen Prothese. In einem ersten Schritt 101 des Verfahrens 100 wird ein Gerüst für die zu erzeugende dentale Prothese bereitgestellt. Anschließend wird das Gerüst gescannt (Schritt 105), d.h. es werden dreidimensionale Geometriedaten des Gerüstes erfasst. Alternativ könnten dreidimensionale Geometriedaten des Gerüstes auch zusammen mit dem Gerüst bereitgestellt werden. Auf Basis der nun bekannten Geometriedaten des Gerüstes werden die dreidimensionalen Geometriedaten der Verblendung vorgegeben (Schritt 110). Anschließend wird unter Verwendung dieser Geometriedaten der Verblendung ein Modell der Verblendung erzeugt (Schritt 120), welches in Schritt 124 zum Bilden einer Negativform der Verblendung verwendet wird. Das Bilden 124 der Negativform umfasst ein Einschließen 126 des Gerüstes zusammen mit dem Modell der Verblendung in einem Formmaterial und ein anschließendes Entfernen 128 des Modellmaterials. Beim Einschließen 126 wird eine Leitung gebildet (Schritt 127), die zum Entfernen 128 des Modellmaterials dient. Durch die gleiche Leitung wird in Schritt 130 die Negativform mit Verblendmaterial gefüllt, womit die dentalen Prothese hergestellt ist.

Das Füllen der Negativform (vgl. Fig. 7, Bezugszeichen 11) erfolgt bevorzugt mittels eines Heißpressverfahrens. Das Verfahren des Heißpressens einer Keramik in eine geeignete Form ist als solches dem Fachmann bekannt, so dass hier darauf verzichtet wird, näher auf dieses Verfahren einzugehen. Ein Verfahren und ein entsprechender Ofen zur Herstellung von Zahnersatzteilen durch das Heißpressverfahren ist beispielsweise in EP 0 231 773 A1 beschrieben. Eine Anwendung dieses Verfahrens zur Herstellung eines vollkeramischen Dentalaufbaus mit einem Zirkonoxidstift als Gerüst wird in DE 196 30 412 A1 vorgeschlagen. Eine Weiterbildung des Verfahrens aus EP 0 231 773 A1 lässt sich DE 101 36 584 A1 entnehmen.

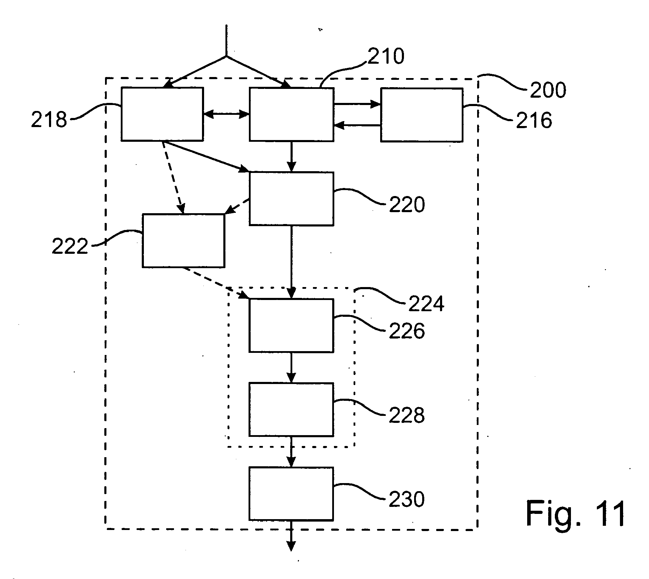

Fig. 11 zeigt im Fließbild eine zweite Ausführungsform des erfindungsgemäßen Verfahrens zum Erzeugen einer dentalen Prothese. Im Verfahren 200 sind dreidimensionale Geometriedaten des Gerüstes bereits vorgegeben. Auf Basis der vorgegebenen Geometriedaten des Gerüstes werden die dreidimensionalen Geometriedaten der Verblendung vorgegeben (Schritt 210), wobei gegenüber einem Benutzer Geometriedaten ausgegeben und von diesem Benutzer Eingaben empfangen werden (Schritt 216), die ebenfalls zum Vorgeben der Geometriedaten der Verblendung verwendet werden. Unabhängig vom Vorgeben der dreidimensionalen Geometriedaten der Verblendung wird in Schritt 218 anhand der dreidimensionalen Geometriedaten des Gerüstes das Gerüst geformt. Das Formen 218 des Gerüstes geschieht mittels computerunterstützter Fertigung in aufbauender und/oder abtragender Weise. Es kann auch vorgesehen werden, dass zwischen den Prozessen der Vorgabe der Verblendungsgeometrie 210 und dem Formen 218 des Gerüstes Daten ausgetauscht werden, die auf den jeweilig anderen Prozess Einfluss haben. Das Formen 218 kann vor oder nach dem Vorgeben 210 der Geometriedaten der Verblendung oder zeitgleich dazu vorgenommen werden. Als Alternative zum aufbauenden oder abtragenden Formen des Gerüstes selbst kann das Gerüst auch mittels des "lost-wax"-Verfahrens hergestellt werden, wobei ein Modell des Gerüstes computerunterstützt hergestellt wird.

Sofern das Modell der Verblendung auf dem Gerüst selbst erzeugt werden soll, schließt sich an das Formen 218 des Gerüstes das Erzeugen 220 eines Modell der Verblendung auf dem geformten Gerüst unter Verwendung der vorgegebenen Geometriedaten der zu erzeugenden Verblendung an. Alternativ dazu kann das Modell auch getrennt von dem Gerüst erzeugt werden (Schritt 220), wobei das Formen 218 des Gerüstes und das Erzeugen 220 des Modells der Verblendung zeitlich unabhängig voneinander stattfinden können. Nach Abschluss des Formens 218 des Gerüstes und des Erzeugens 220 des Modells werden Gerüst und Modell zusammengebracht (Schritt 222). Es ist auch möglich, das Modell teilweise auf dem Gerüst zu erzeugen und teilweise getrennt davon. Das Modell wird ebenfalls computerunterstützt erzeugt. Rapid-Prototyping-Verfahren lassen sich hierbei vorteilhaft einsetzen.

Die grundsätzlichen Verfahrensweisen bei computerunterstützter Fertigung oder Erzeugung, sei es allgemeines aufbauendes oder abtragendes Formen wie Fräsen oder Beschichten oder ein Rapid-Prototyping-Verfahren, können als bekannt angesehen werden, so dass hier auf eine nähere Erläuterung verzichtet werden kann.

Anschließend an das Erzeugen 220 bzw. Zusammenführen 222 wird die Kombination aus Gerüst und Modell verwendet, um eine Negativform der Verblendung zu bilden (Schritt 224). Hierbei werden das Modell der Verblendung und das Gerüst gemeinsam in einer Einbettmasse eingeschlossen (Schritt 226) und das Material des Modells durch eine thermische Behandlung entfernt (Schritt 22830). Die dadurch entstandene Form wird mit einer Presskeramik zur Herstellung der verblendeten dentalen Prothese gefüllt (Schritt 230).

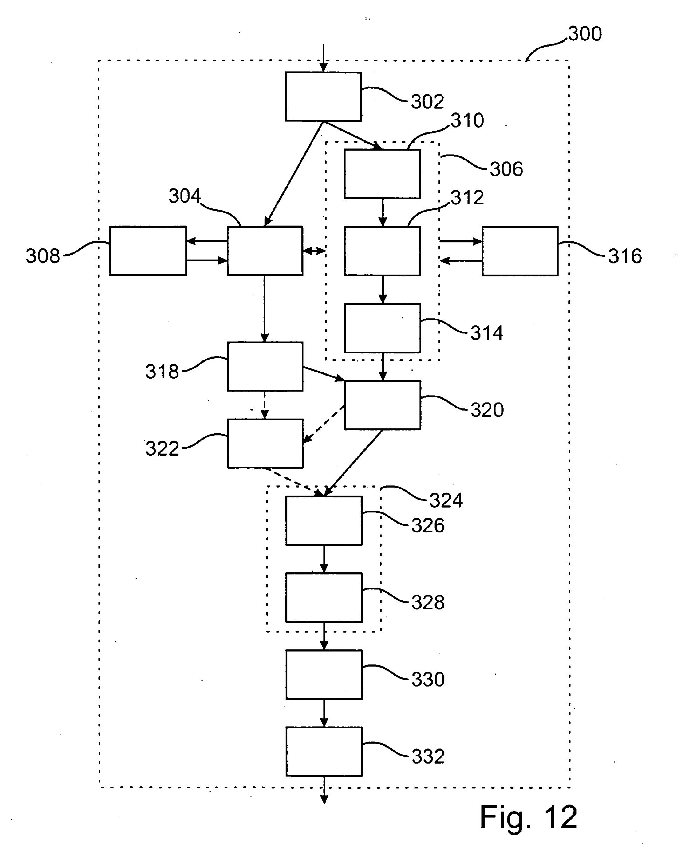

Fig. 12 zeigt eine dritte Ausführungsform des erfindungsgemäßen Verfahrens zum Erzeugen einer dentalen Prothese. In einem ersten Schritt 302 des Verfahrens 300 werden die dreidimensionalen Geometriedaten eines Gebisses eines Patienten und eines darin enthaltenen Zahnstumpfes erfasst. Dazu wird durch Abformung ein Modell des Gebisses und des Zahnstumpfes erstellt und optisch erfasst. Alternativ kann das Erfassen durch eine optische Aufnahme (Scan) direkt im Mund des Patienten (auch etwa mittels Röntgenaufnahmen), durch eine direkte oder indirekte mechanische Aufnahme (Abtasten) oder auf andere geeignete Weise erfolgen. Kombinationen aus den unterschiedlichen Erfassungsmethoden sind ebenfalls möglich. Anschließend werden die Geometriedaten des Gerüstes sowie des Modells der Verblendung vorgegeben (Schritte 304 und 306). Die Geometriedaten des Gerüstes werden beim Vorgeben 304 an einen Benutzer ausgegeben, der über entsprechende Eingaben auf die Vorgabe einwirken kann (Schritt 308). Parallel zum Vorgeben 304 der Geometriedaten des Gerüstes erfolgt das Vorgeben 306 der dreidimensionalen Geometriedaten des Modells. Dies umfasst ein Vorgeben 310 der dreidimensionalen Geometriedaten der zu erstellenden Verblendung, ein Vorgeben 312 von dreidimensionalen Geometriedaten von (gerüstseitigen) Hohlräumen im Modell und ein Vorgeben 314 von dreidimensionalen Geometriedaten des Gusskanalsystems zusammen mit eventuellen Leitungen zum Vereinfachen des späteren Entfernens des Modells aus der Form. Die Geometriedaten der gewünschten Verblendung, der Hohlräume und des Leitungssystems werden zum Vorgeben der dreidimensionalen Geometriedaten des Modell verwendet. Die hierbei jeweilig vorgegebenen Geometriedaten werden für einen Benutzer einzeln und in Kombination dargestellt, der seinerseits Einfluss auf einzelne oder alle Geometriedaten nehmen kann (Schritt 316). Beim Vorgeben 306 der Geometriedaten des Modells werden die zuvor erfassten Geometriedaten des Gebisses und des Zahnstumpfes mit in Betracht gezogen. Die Geometriedaten des Gerüstes und die Geometriedaten des Modells werden bei der Vorgabe der jeweils anderen Daten ebenfalls verwendet.

Ähnlich wie bei der mit Bezug auf Fig. 11 beschriebenen Ausführungsform des erfindungsgemäßen Verfahrens schließt sich an das Vorgeben der Geometriedaten des Gerüstes und des Modells der Verblendung (Schritte 304, 306), die alternativ auch in einen einzelnen kombinierten Vorgabeprozess zusammengefasst werden können, ein Herstellen 318 des Gerüstes und ein Erzeugen 320 des Modells der Verblendung an. Grundsätzlich kann das Erzeugen 320 des Modells auf dem Gerüst oder zumindest teilweise separat davon geschehen. Werden Teile des Modells separat vom Gerüst erzeugt, so wird in Schritt 322 die Kombination aus Modell und Gerüst vervollständigt.

Zusammen mit dem Modell wird das Gerüst in Schritt 324 zum Bilden einer Negativform der Verblendung verwendet. Hierzu wird das Modell auf dem Gerüst in einem Formmaterial eingeschlossen (Schritt 326) und anschließend entfernt (Schritt 328). In Schritt 330 wird in bekannter Weise die Form mit Verblendmaterial gefüllt.

Mit dem Füllen 330 der Negativform mit Verblendmaterial ist die dentale Prothese im dem Gerüst und der Verblendung im Grundsatz hergestellt. Das Erzeugen der dentalen Prothese wird in einem Schritt 332 durch geeignetes Nacharbeiten, insbesondere durch Abtrennen des Leitungssystems, komplettiert.

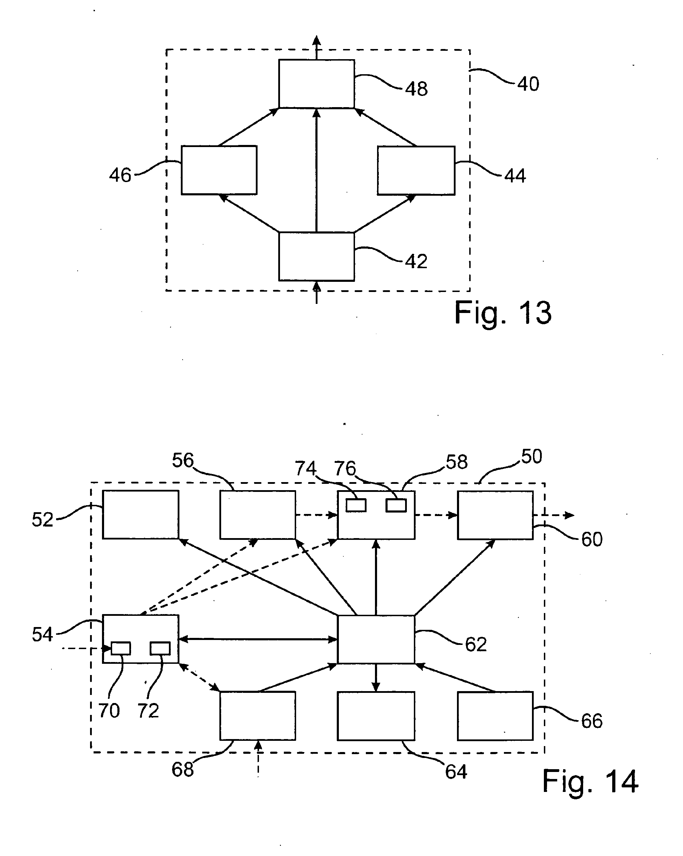

Fig. 13 zeigt eine erste Ausführungsform des erfindungsgemäßen System zum Erzeugen einer dentalen Prothese. Das System 40 zum Erzeugen einer dentalen Prothese mit einem Gerüst und einer Verblendung umfasst ein Vorgabemittel 42, ein Gerüstvorbereitungsmittel 44, ein Modellerzeugungsmittel 46 und ein Füllungsmittel 48. Das Vorgabemittel dient zum Vorgeben dreidimensionaler Geometriedaten der Verblendung. Um die dentale Prothese auf eine spezielle Gebiss-Situation angepasst herzustellen, empfängt das Vorgabemittel 42, das durch einen herkömmlichen Computer mit geeigneter Software dargestellt wird, beispielsweise dreidimensionale Geometriedaten des jeweiligen Gebisses. Auf Basis dieser Gebissdaten werden durch das Vorgabemittel 42 die dreidimensionalen Geometriedaten der gewünschten Verblendung berechnet. Zudem erhält das Vorgabemittel 42 dreidimensionale Geometriedaten des Gerüstes.

Die Geometriedaten der Gerüstes werden an das Gerüstvorbereitungsmittel 44 gegeben, das etwa von einer herkömmlichen Fräsmaschine gebildet wird, die durch das Vorgabemittel 42 gesteuert bzw. mit Daten versehen wird. Aus einem Keramikblock fräst das Gerüstvorbereitungsmittel 44 ein Gerüst mit den vorgegebenen Geometriedaten heraus. Alternativ kann auch ein metallisches Gerüst aus einem Metallblock gefräst werden.

Die von dem Vorgabemittel 42 vorgegebenen dreidimensionalen Geometriedaten der Verblendung werden verwendet, um dreidimensionale Geometriedaten eines Modells der Verblendung zu bestimmen, die beispielsweise auch die Geometriedaten eines angesetzten Gusskanals umfassen können. Diese Bestimmung kann vom Vorgabemittel 42 oder vom Modellerzeugungsmittel 46 durchgeführt werden. Das Modellerzeugungsmittel 46, beispielsweise eine herkömmliche Rapid-Protyping-Vorrichtung zur Stereolithographie oder zum 3D-Printen, erzeugt mit den dreidimensionalen Geometriedaten des Modells der Verblendung ein Modell der Verblendung, das z. B. in seiner Innenkontur von der Gerüstaußenkontur abweicht.

Das erzeugte Modell wird auf das hergestellte Gerüst aufgesetzt, vorzugsweise manuell unter Verwendung eines Artikulators, insbesondere wenn die Innenkontur von der Außenkontur des Gerüstes abweicht. Gerüst und Modell werden gemeinsam in bekannter Weise in eine Einbettmasse eingeschlossen, wonach das Material des Modells aus der damit erzeugten Form entfernt wird, um eine Negativform der Verblendung zu hinterlassen. Bevorzugt erfolgt das Entfernen durch Ausbrennen oder Ausschmelzen des Modellmaterials, das vorteilhafterweise ein Wachs oder ein Kunststoff ist.

Die Negativform wird von dem Füllungsmittel 48 gefüllt, womit die dentale Prothese hergestellt wird. Das Füllungsmittel ist beispielsweise ein in EP 0 231 773 A1 oder DE 101 36 584 A1 beschriebener Heißpress-Ofen.

Fig. 14 zeigt eine zweite Ausführungsform des erfindungsgemäßen System zum Erzeugen einer dentalen Prothese. Das System 50 zum Erzeugen einer dentalen Prothese mit einem Gerüst und einer Verblendung ist wesentlich komplexer als das in Fig. 13 gezeigte und weist ein Vorgabemittel 52, ein Gerüstvorbereitungsmittel 54, ein Modellerzeugungsmittel 56, ein Formbildungsmittel 58, ein Füllungsmittel 60, eine Steuereinheit 62, ein Ausgabemittel 64, ein Eingabemittel 66 und ein Erfassungsmittel 68 auf. Die im Schema von Fig. 13 die Bestandteile verbindenden durchgezogenen Pfeile zeigen einen Datenfluss an, während die gestrichelten Pfeile eine Bewegung eines Gegenstands wie eines Gerüstes, eines Modells oder der dentalen Prothese anzeigen. Die Systembestandteile als solche sind dem Fachmann ausreichend bekannt, so dass es genügt, die Funktionen der Bestandteile anzugeben und es dem Fachmann zu überlassen, im Rahmen seines Fachwissens geeignete strukturelle Merkmale zu bestimmen. Es ist zu bemerken, dass statt oder neben der Bewegung der Prothesenbestandteile auch die Bestandteile des Systems bewegt werden können.

Die Steuereinheit 62 steuert und verwaltet zentral die Prozesse und Daten im System 50. Alternativ ist es möglich, die Funktionen der Steuereinheit ganz oder teilweise an andere Bestandteile des Systems 50 zu übergeben, so dass auf die Steuereinheit unter Umständen als eigenständige Einheit verzichtet werden kann. Die Steuereinheit 62 kann beispielsweise durch einen gewöhnlichen Computer mit einer geeigneten Software oder auch durch einen Mikrocontroller mit einer Hardware-Programmierung realisiert werden.

Das Vorgabemittel 52 dient zum Vorgeben dreidimensionaler Geometriedaten und empfängt hierzu Eingaben von der Steuereinheit 62. Der Umfang dieser Eingaben kann von einfachen grundsätzlichen oder gar genormten Geometriedaten bis zu einem vollständigen Satz der dreidimensionalen Geometriedaten des (Rest-)Gebisses, in das die dentale Prothese eingesetzt werden soll, des Zahnstumpfes, auf den die dentale Prothese aufgesetzt werden soll, des Gerüstes und der zu erstellenden dentalen Prothese variieren. Die auf dieser Basis vorgegebenen dreidimensionalen Geometriedaten werden von Vorgabemittel 52 an die Steuereinheit 62 übermittelt. Das Vorgabemittel 52 kann auch mit in die Steuereinheit 62 integriert sein oder einen davon getrennten Prozessor oder Computer darstellen.

Das Gerüstvorbereitungsmittel 54 steht wie das Vorgabemittel 52 in Kontakt mit der Steuereinheit 62. Das Gerüstvorbereitungsmittel 54 umfasst eine Bereitstellungseinheit 70 und eine Herstellungseinheit 72. Die Bereitstellungseinheit 70 dient zur Bereitstellung eines vorgefertigten Gerüstes für die dentale Prothese. Die Herstellungseinheit 72 ist zum Herstellen eines Gerüstes vorgesehen, wozu von der Steuereinheit 62 dreidimensionale Geometriedaten vorgegeben werden können. Das Gerüstvorbereitungsmittel 54 ist ausgestaltet, um das Gerüst an das Modellerzeugungsmittel 56, das Formbildungsmittel 58 und das Erfassungsmittel 68 weiterzugeben. Insbesondere für die Herstellungseinheit 72 sind kommerziell eine Reihe von Geräten zur rechnerunterstützten aufbauenden oder abtragenden Fertigung erhältlich.

Das Modellerzeugungsmittel 56 erzeugt auf Basis der dreidimensionalen Geometriedaten der Verblendung bzw. des Modells, die ihm von der Steuereinheit 62 übermittelt werden, ein Modell der Verblendung. Um das Modell gegebenenfalls direkt auf dem Gerüst erzeugen zu können, ist das Modellerzeugungsmittel 56 ausgestaltet, um ein Gerüst von dem Gerüstvorbereitungsmittel 54 zu empfangen. Zudem ist das Modellerzeugungsmittel 56 ausgelegt, um das erzeugte Modell an das Formbildungsmittel 58 zu übergeben. Ebenso wie insbesondere bei der Herstellungseinheit 72 des Gerüstvorbereitungsmittels 54 kann als Modellerzeugungsmittel 56 eine kommerziell erhältliche rechnergestützte Fertigungsmaschine eingesetzt werden.

Das Formbildungsmittel 58 empfängt von dem Modellerzeugungsmittel 56 das erzeugte Modell. Sofern das Modell nicht bereits auf dem Gerüst erzeugt wurde, empfängt das Formbildungsmittel 58 auch das Gerüst vom Gerüstvorbereitungsmittel 54. Das Formbildungsmittel umfasst eine Einbettungseinheit 74 und eine Modellentfernungseinheit 76. Mittels der Einbettungseinheit 74 wird das Modell zusammen mit dem Gerüst in ein Formmaterial eingebettet. Eine einfache Ausgestaltung der Einbettungseinheit 74 besteht in einem Behälter, der zur Aufnahme der Kombination aus Gerüst und Modell und des Formmaterials vorgesehen ist, und das Formmaterial bis zu einer Erstarrung um die Kombination fixiert. Die Modellentfernungseinheit 76 dient zum Entfernen des Modellmaterials aus der mit dem Einbetten erstellten Form. Ein Beispiel für eine Modellentfernungseinheit 76 ist ein Ofen, der die Kombination aus Gerüst und Modell im Formmaterial aufheizt, um das Modellmaterial auszuschmelzen, auszubrennen oder anderweitig zu entfernen. Eine weitere Möglichkeit besteht darin, zum Entfernen ein Lösungsmittel vorzusehen, das das Modellmaterial auflöst und gemeinsam mit dem Modellmaterial aus der Form entfernt wird. Die vom Modellmaterial befreite Negativform der Verblendung wird an das Füllungsmittel 60 übergeben. Das Formbildungsmittel 58 wird von der Steuereinheit 62 gesteuert.

Das Füllungsmittel 60 ist zum Füllen der von dem Formbildungsmittel 58 erhaltenen Negativform der Verblendung vorgesehen, wobei durch das Füllen die Verblendung auf dem Gerüst erzeugt und damit die dentale Prothese gefertigt wird.

Zum Füllen der Form mit beispielsweise Keramikmaterial oder Kunststoff stehen dem Fachmann eine Vielzahl von möglichen Vorrichtungen zur Verfügung, die in geeigneter Weise als Füllungsmittel 60 eingesetzt werden können. Beispiele des Heißpressens von Keramik werden in EP 0 231 773 A1, DE 196 30 412 A1 und DE 101 46 584 A1 beschrieben. Auch das Füllungsmittel 60 wird von der Steuereinheit 62 gesteuert und kontrolliert. Aus dem Füllungsmittel 60 wird die dentale Prothese ausgegeben, wobei unter Umständen noch Nachbehandlungsschritte vorgesehen sein können.

Das Ausgabemittel 64 ist als Bildschirm ausgestaltet und dient dazu, Ausgaben an einen Benutzer zu erlauben, insbesondere dem Benutzer die Wahrnehmung von im System verwendeten bzw. bestimmten dreidimensionalen Geometriedaten zu erlauben. Das Eingabemittel 66 dient dem Benutzer zur Eingabe, wobei die Eingabe insbesondere zur Manipulation oder Korrektur der im System vorliegenden dreidimensionalen Geometriedaten vorgesehen ist. Das Eingabemittel 66 umfasst herkömmliche Eingabegeräte wie eine Tastatur, eine Maus oder einen Touch-Screen.

Das Erfassungsmittel 68 ist zur Erfassung dreidimensionaler Geometriedaten, beispielsweise eines (Rest-)Gebisses, eines Zahnstumpfes oder eines Gerüstes, vorgesehen. Dem Fachmann stehen eine Reihe von unterschiedlichen Geräten zur Erfassung von dreidimensionaler Geometriedaten zur Verfügung, wobei die zu untersuchenden Objekte insbesondere optisch und/oder mechanisch abgetastet werden. Im weiteren Sinne können auch Verfahren wie die Röntgentomographie als optisch angesehen werden. Die erfassten Daten werden an die Steuereinheit übermittelt und im System verwandt.

Die vorliegende Erfindung stellt insbesondere ein Verfahren und ein System zur Erzeugung einer dentalen Prothese mit einem Gerüst und einer Verblendung bereit, bei dem dreidimensionale Geometriedaten entsprechend der Gebisssituation, die beispielsweise zur Erzeugung des metallischen oder keramischen Gerüstes mittels computerunterstützter Vorgabe und Fertigung (CAD/CAM) verwendet werden können, zur Vorgabe dreidimensionaler Geometriedaten der Verblendung eingesetzt werden, insbesondere zum computerunterstützten Generieren der Geometriedaten. Anhand der vorgegebenen dreidimensionalen Geometriedaten wird ein Modell der Verblendung erzeugt, das insbesondere im "lost-wax"-Verfahren zur Erzeugung der dentalen Prothese dient.

Ein Zahntechniker erfasst computergestützt die geometrischen Daten eines Meistermodells, auf welchem er eine Zahnrestauration vornehmen möchte, beispielsweise eine dreigliedrige Brücke im Frontzahnbereich. Die im Rechner verarbeiteten Daten werden verwendet, um durch beispielsweise Fräsen eines dichtgesinterten Zirkonoxid-Blocks als keramischem Rohling das Gerüst herzustellen. Die geometrischen Daten des so erzeugten Gerüstes, insbesondere dessen Außenkontur, werden gemeinsam mit ebenfalls erfassten dreidimensionalen Geometriedaten des Gegengebisses vom Rechner verarbeitet und zur Vorgabe von dreidimensionalen Geometriedaten eines Modells der Verblendung verwendet. Beispielsweise mittels Stereolithographie wird ein solches Modell aus Kunststoff hergestellt, das auch mehrteilig sein kann. Nach einem Aufsetzen des Modells bzw. der Modellteile auf das Keramikgerüst wird alles zusammen in einer Einbettmasse eingebettet. Ist die Einbettmasse ausgehärtet, wird durch eine Wärmebehandlung der Kunststoff aus der Form ausgebrannt, wobei das Modell rückstandsfrei verbrennt. Der dabei zurückbleibende Hohlraum kann durch beispielsweise Heißpressen mit einer Verblendkeramik aufgefüllt werden, die zusammen mit dem Gerüst die dentale Prothese bildet.

## Patentansprüche

1. Verfahren (100, 200, 300) zum Erzeugen einer dentalen Prothese (17) mit einem Gerüst (3) und einer Verblendung (15), insbesondere einer Krone, einer Brücke, eines Inlays oder eines Onlays, mit den Schritten:
Vorgeben (110, 210, 310) dreidimensionaler Geometriedaten der Verblendung (15),
Bereitstellen (101) oder Herstellen (218, 318) des Gerüstes (3),
Erzeugen (120, 220, 320) eines Modells (5, 5a, 5b. 5c, 5d) der Verblendung (15) auf Basis der dreidimensionalen Geometriedaten der Verblendung (15), auf dem Gerüst (3) oder separat, wobei die dreidimensionalen Geometriedaten die Geometrie der Verblendung (15) vollständig definieren,
Bilden (124, 224, 324) einer Negativform (11) der Verblendung (15) durch Einschließen (126, 226, 326) des Modells (5, 5a, 5b, 5c, 5d) zwischen dem Gerüst (3) und einem Formmaterial (9) und anschließendes Entfernen (128, 228, 328) des Modells (5, 5a, 5b, 5c, 5d), und
Füllen (130, 230, 330) der Negativform (11) mit Verblendmaterial zur Herstellung der verblendeten dentalen Prothese (17).

2. Verfahren (100, 200, 300) nach Anspruch 1, mit folgendem zusätzlichen Schritt:
Aufbauendes und/oder abtragendes Formen (218, 318) des Gerüstes (3) mittels computerunterstützter Fertigung, vorzugsweise mittels eines Rapid-Prototyping-Verfahrens.

3. Verfahren (100, 200, 300) nach einem der vorangehenden Ansprüche, wobei das Gerüst (3) auf Basis vorbestimmter dreidimensionaler Geometriedaten geformt wird.

4. Verfahren (100, 200, 300) nach einem der vorangehenden Ansprüche, wobei das Gerüst (3) ein Metall, eine Metalllegierung und/oder ein Keramikmaterial umfasst oder daraus besteht.

5. Verfahren (100, 200, 300) nach einem der vorangehenden Ansprüche, wobei zum Vorgeben (110, 210, 310) der dreidimensionalen Geometriedaten der Verblendung (15) Benutzereingaben (216, 316) und/oder dreidimensionale Geometriedaten des Gerüstes (3), der zu erzeugenden Prothese (17), eines Gebisses und/oder eines Zahnstumpfes (1) verwendet werden, insbesondere dreidimensionale Geometriedaten des Gerüstes (3) und eines Gebisses.

6. Verfahren (100, 200, 300) nach einem der vorangehenden Ansprüche, wobei das Verfahren (100, 200, 300) ein Erfassen (105, 302) dreidimensionaler Geometriedaten des Gerüstes (3), eines Gebisses und/oder eines Zahnstumpfes (1) umfasst.

7. Verfahren (100, 200, 300) nach einem der vorangehenden Ansprüche, wobei das Erzeugen (120, 220, 320) des Modells (5, 5a, 5b, 5c, 5d) des Verblendung (15) computerunterstützt erfolgt, bevorzugt mittels eines Rapid-Prototyping-Verfahrens, insbesondere mittels Fräsen, 3D-Printen und/oder Stereolithographie.

8. Verfahren (100, 200, 300) nach einem der vorangehenden Ansprüche, wobei an das Modell (5, 5a, 5b, 5c, 5d) der Verblendung (15) zusätzlich eine Positivform (7) für wenigstens eine das Füllen (130, 230, 330) der Negativform (11) und/oder das Entfernen des Modells (5, 5a, 5b, 5c, 5d) erleichtemde Leitung (13) angesetzt wird, insbesondere für einen Gusskanal (13).

9. Verfahren (100, 200, 300) nach einem der vorangehenden Ansprüche, wobei das erzeugte Modell (5, 5a, 5b, 5c, 5d) der Verblendung (15) eine geschlossene Außenfläche und auf der dem Gerüst (3) zugewandten Seite Hohlräume (10) aufweist.

10. Verfahren (100, 200, 300) nach einem der vorangehenden Ansprüche, wobei das Entfernen (128, 228, 328) des Modells (5, 5a, 5b, 5c, 5d) der Verblendung (15) ein Ausbrennen und/oder Ausschmelzen des Modells (5, 5a, 5b, 5c, 5d) der Verblendung (15) umfasst, wobei das Formmaterial (9) ein feuerfestes Material ist, insbesondere eine Einbettmasse (9).

11. Verfahren (100, 200, 300) nach Anspruch 10, wobei das Modell (5, 5a, 5b, 5c, 5d) der Verblendung (15) rückstandsfrei verbrennbar und/oder rückstandsfrei aussctimelzbar ist und insbesondere aus einem Wachs und/oder einem Kunststoff erzeugt wird.

12. Verfahren (100, 200, 300) nach einem der vorangehenden Ansprüche, wobei die Negativform (11) mit einem Verblendkeramikmaterial gefüllt wird, insbesondere mittels eines Heißpressverfahrens (230).

13. Verfahren (100, 200, 300) nach einem der vorangehenden Ansprüche, wobei bei der Füllung der Negativform (11) ein Farbverlauf in der Verblendung eingestellt wird, insbesondere durch Verpressen eines Rohlings mit einem Farbverlauf.

14. Verfahren (100, 200, 300) nach einem der vorangehenden Ansprüche, wobei das Verfahren (100, 200, 300) zum Erzeugen und Verwenden eines mehrstückigen Modells (5a, 5b) und/oder zum Erzeugen einer mehrstückigen dentalen Prothese ausgestaltet ist.

15. System (40, 50) zum Erzeugen einer dentalen Prothese (17) mit einem Gerüst (3) und einer Verblendung (15), insbesondere einer Krone, einer Brücke, eines Inlays oder eines Onlays, mit:
einem Vorgabemittel (42, 52) zum Vorgeben (110, 210, 310) dreidimensionaler Geometriedaten der Verblendung (15), wobei die dreidimensionalen Geometriedaten die Geometrie der Verblendung (15) vollstandig definieren,
einem Gerüstvorbereitungsmittel (44, 54) zum Bereitstellen (101) oder Herstellen (218, 318) des Gerüstes (3),
einem Modellerzeugungsmittel (46, 56) zum Erzeugen (120, 220, 320) eines Modells (5, 5a, 5b, 5c, 5d) der Verblendung (15) auf Basis der dreidimensionalen Geometriedaten der Verblendung (15), auf dem Gerüst (3) oder separat, und
einem Füllungsmittel (48, 60) zum Füllen (130, 230, 330) einer durch Einschließen des Modells (5, 5a, 5b, 5c, 5d) zwischen dem Gerüste (3) und einem Formmaterial (9) und anschließendes Entfernen (128, 228, 328) des Modells (5, 5a, 5b, 5c, 5d) gebildeten Negativform (11) mit Verblendmaterial zur Herstellung der verblendeten dentalen Prothese (17).

16. Computerprogramm mit Computerprogrammcode, der ein Computersystem zum Erzeugen einer dentalen Prothese (17) mit einem Gerüst (3) und einer Verblendung (15) veranlasst, ein Verfahren (100, 200, 300) nach einem der Ansprüche 1 bis 14 auszuführen, wenn das Computerprogramm auf dem Computersystem ausgeführt wird.

## Claims

1. A method (100, 200, 300) of producing a dental prosthesis (17) having a framework (3) and a veneer (15), in particular a crown, a bridge, an inlay or an onlay, having the steps:
definition (110, 210, 310) of three-dimensional geometric data of the veneer (15),
provision (101) or manufacture (218, 318) of the framework (3), production (120, 220, 320) of a model (5, 5a, 5b, 5c, 5d) of the veneer (15), on the basis of the three-dimensional geometric data of the veneer (15), on the framework (3) or separately, wherein the three-dimensional geometric data completely define the geometry of the veneer (15),
formation (124, 224, 324) of a negative mould (11) of the veneer (15) by inclusion (12B, 226, 326) of the model (5, 5a, 5b, 5c, 5d) between the framework (3) and a moulding material (9) and
subsequent removal (128, 228, 328) of the model (5, 5a, 5b, 5c, 5d), and
filling (13D, 230, 330) of the negative mould (11) with veneering material to manufacture the veneered dental prosthesis.

2. A method (100, 200, 300) according to claim 1, having the following additional step:
additive and/or subtractive shaping (218, 318) of the framework (3) by means of computer-assisted manufacture, preferably by means of a rapid prototyping method.

3. A method (100, 200, 300) according to any one of the preceding claims, wherein the framework (3) is shaped on the basis of predetermined three-dimensional geometric data.

4. A method (100, 200, 300) according to any one of the preceding claims, wherein the framework (3) comprises or consists of a metal, a metal alloy and/or a ceramic material.

5. A method (100, 200, 300) according to any one of the preceding claims, wherein for definition (110, 210, 310) of the three-dimensional geometric data of the veneer (15), user inputs (216, 318) and/or three-dimensional geometric data of the framework (3), the prosthesis (17) to be produced, a set of teeth and/or a tooth stump (1) are used, in particular three-dimensional geometric data of the framework (3) and a set of teeth.

6. A method (100, 200, 300) according to any one of the preceding claims, wherein the method (100, 200, 300) comprises determination (105, 302) of three-dimensional geometric data of the framework (3), a set of teeth and/or a tooth stump (1).

7. A method (10D, 200, 300) according to any one of the preceding claims, wherein the production (120, 220, 320) of the model (5, 5a, 5b, 5c, 5d) of the veneer (15) takes place in a computer-assisted manner, preferably by means of a rapid prototyping method, in particular by means of milling, 3D printing and/or stereolithography.

8. A method (100, 200, 300) according to any one of the preceding claims, wherein additionally a positive mould (7) for at least one line (13), in particular for a sprue (13), simplifying the filling (130, 230, 330) of the negative mould (11) and/orthe removal of the model (5, 5a, 5b, 5c, 5d) is joined onto the model (5, 5a, 5b, 5c, 5d) of the veneer (15).

9. A method (100, 200, 300) according to any one of the preceding claims, wherein the produced model (5, 5a, 5b, 5c, 5d) of the veneer (15) has a closed outer surface and has cavities (10) at the side facing the framework (3).

10. A method (100, 200, 300) according to any one of the preceding claims, wherein the removal (128, 228, 328) of the model (5, 5a, 5b, 5c, 5d) of the veneer (15) comprises a burning out and/or melting out of the model (5, 5a, 5b, 5c, 5d) of the veneer (15), wherein the moulding material (9) is a refractory material, in particular an embedding compound (9).

11. A method (100, 200, 300) according to claim 10, wherein the model (5, 5a, 5b, 5c, 5d) of the veneer (15) is combustible in a residue-free manner and/or can be melted out in a residue-free manner and is in particular produced from a wax and/or a plastics material.

12. A method (100, 200, 300) according to any one of the preceding claims, wherein the negative mould (11) is filled with a veneering ceramic material, in particular by means of a hot press method (230).

13. A method (100, 200, 300) according to any one of the preceding claims, wherein a colour gradient in the veneer is set when filling the negative mould (11), in particular by pressing a blank with a colour gradient.

14. A method (100, 200, 300) according to any one of the preceding claims, wherein the method (100, 200, 300) is developed for producing and using a multipart model (5a, 5b) and/or for producing a multipart dental prosthesis.

15. A system (40, 50) for producing a dental prosthesis (17) having a framework (3) and a veneer (15), in particular a crown, a bridge, an inlay or an onlay, having
defining means (42, 52) for defining (110, 210, 310) three-dimensional geometric data of the veneer (15), wherein the three-dimensional geometric data completely define the geometry of the veneer (15),
a framework preparation means (46, 56) for providing (101) or producing (218, 318) the framework (3),
a model producing means (46, 56) for producing (120, 220, 320) a model (5, 5a, 5b, 5c, 5d) of the veneer (15), on the basis of the three-dimensional geometric data of the veneer (15), on the framework (3) or separately, and
a filling means (48, 60) for filling (130, 230, 330) a negative mould (11), formed by inclusion of the model (5, 5a, 5b, 5c, 5d) between the framework (3) and a moulding material (9) and subsequent removal (128, 228, 328) of the model (5, 5a, 5b, 5c, 5d), with veneering material to manufacture the veneered dental prosthesis (17).

16. A computer program with a computer program code which causes a computer system for producing a dental prosthesis (17) with a framework (3) and a veneer (15) to carry out a method (100, 200, 300) according to any one of claims 1 to 14 when the computer program is run on the computer system.

## Revendications

1. Procédé (100, 200, 300) destiné à la fabrication d'une prothèse dentaire (17) comprenant une armature (3) et une facette (15), notamment d'une couronne, d'un bridge, d'un inlay ou d'un onlay, comprenant les étapes de:
spécification (110, 210, 310) des données géométriques tridimensionnelles de la facette (15),
préparation (101) ou fabrication (218, 318) de l'armature (3),
production (120, 220, 320), sur l'armature (3) ou à part, d'un modèle (5, 5a, 5b, 5c, 5d) de la facette (15) en se basant sur les données géométriques tridimensionnelles de la facette (15), les données géométriques tridimensionnelles définissant totalement la géométrie de la facette (15),
formation (124, 224, 324) d'un moule négatif (11) de la facette (15) en enfermant (126, 226, 326) le modèle (5, 5a, 5b, 5c, 5d) entre l'armature (3) et un matériau de moule (9) et en retirant ensuite (128, 228, 328) le modèle (5, 5a, 5b, 5c, 5d) et
remplissage (130, 230, 330) du moule négatif (11) avec un matériau de revêtement servant à fabriquer la prothèse dentaire à facette (17).

2. Procédé (100, 200, 300) selon la revendication 1, comprenant l'étape supplémentaire suivante:
usinage additif et/ou soustractif (218, 318) de l'armature (3) en recourant à la fabrication assistée par ordinateur, de préférence à un procédé de prototypage rapide.

3. Procédé (100, 200, 300) sselon l'une quelconque des revendications précédentes, dans lequel l'armature (3) est formée sur la base de données géométriques tridimensionnelles prédéterminées.

4. Procédé (100, 200, 300) selon l'une quelconque des revendications précédentes, l'armature (3) comprenant ou étant constituée d'un métal, d'un alliage métallique et/ou d'une matière céramique.

5. Procédé (100, 200, 300) selon l'une quelconque des revendications précédentes, dans lequel des données d'utilisateur (216, 316) et/ou des données géométriques tridimensionnelles de l'armature (3), de la prothèse (17) à fabriquer, d'une denture et/ou d'un moignon de dent (1), notamment des données géométriques tridimensionnelles de l'armature (3) et d'une denture, sont utilisées pour spécifier (110, 210, 310) les données géométriques tridimensionnelles de la facette (15).

6. Procédé (100, 200, 300) selon l'une quelconque des revendications précédentes, le procédé (100, 200, 300) comprenant une saisie (105, 302) de données géométriques tridimensionnelles de l'armature (3), d'une denture et/ou d'un moignon de dent (1).

7. Procédé (100, 200, 300) selon l'une quelconque des revendications précédentes, dans lequel la production (120, 220, 320) du modèle (5, 5a, 5b, 5c, 5d) de la facette (15) est assistée par ordinateur, de préférence au moyen d'un procédé de prototypage rapide, notamment par fraisage, impression 3b et/ou stéréolithographie.

8. Procédé (100, 200, 300) selon l'une quelconque des revendications précédentes, dans lequel un moule positif (7) pour au moins un conduit (13), notamment pour un canal de coulée (13), qui facilite le remplissage (130, 230, 330) du moule négatif (11) et/ou le retrait du modèle (5, 5a, 5b, 5c, 5d) est appliqué, en plus, sur le modèle (5, 5a, 5b, 5c, 5d) de la facette (15).

9. Procédé (100, 200, 300) selon l'une quelconque des revendications précédentes, dans lequel le modèle produit (5, 5a, 5b, 5c, 5d) de la facette (15) comporte une surface extérieure fermée et des espaces creux (10) sur le côté tourné vers l'armature (3).

10. Procédé (100, 200, 300) selon l'une quelconque des revendications précédentes, dans lequel le retrait (128, 228, 328) du modèle (5, 5a, 5b, 5c, 5d) de la facette (15) comprend une extraction par combustion et/ou une extraction par fusion du modèle (5, 5a, 5b, 5c, 5d) de la facette (15), le matériau de moule (9) étant un matériau réfractaire, notamment un composé d'enrobage (9).

11. Procédé (100, 200, 300) selon la revendication 10, dans lequel le modèle (5, 5a, 5b, 5c, 5d) de la facette (15) peut brûler sans résidus et/ou peut être extrait par fusion sans résidus et est notamment produit à partir d'une cire et/ou d'une matière plastique.

12. Procédé (100, 200, 300) selon l'une quelconque des revendications précédentes, dans lequel le moule négatif (11) est rempli d'une matière céramique de revêtement, notamment au moyen d'un procédé de compression à chaud.

13. Procédé (100, 200, 300) selon l'une quelconque des revendications précédentes, dans lequel, lors du remplissage du moule négatif (11), un dégradé de couleurs est établi dans la facette, notamment par moulage par compression d'une ébauche présentant un dégradé de couleurs.

14. Procédé (100, 200, 300) selon l'une quelconque des revendications précédentes, dans lequel le procédé (100, 200, 300) est étudié pour produire et utiliser un modèle en plusieurs parties (5a, 5b) et/ou pour fabriquer une prothèse dentaire en plusieurs parties.

15. Système (40, 50) destiné à la fabrication d'une prothèse dentaire (17) comprenant une armature (3) et une facette (15), notamment d'une couronne, d'un bridge, d'un inlay ou d'un onlay, comprenant:
un moyen de spécification (42, 52) pour spécifier (110, 210, 310) les données géométriques tridimensionnelles de la facette (15), les données géométriques tridimensionnelles définissant totalement la géométrie de la facette (15),
un moyen de préparation d'armature (44, 54) pour préparer (101) ou fabriquer (218, 318) l'armature (3),
un moyen de production de modèle (46, 56) pour produire (120, 220, 320), sur l'armature (3) ou à part, un modèle (5, 5a, 5b, 5c, 5d) de la facette (15) en se basant sur les données géométriques tridimensionnelles de la facette (15),
un moyen de remplissage (48, 60) pour remplir (130, 230, 330) d'un matériau de revêtement servant à fabriquer la prothèse dentaire à facette (17) un moule négatif (11) formé en enfermant le modèle (5, 5a, 5b, 5c, 5d) entre l'armature (3) et un matériau de moule (9) et en retirant ensuite (128, 228, 328) le modèle (5, 5a, 5b, 5c, 5d).

16. Programme d'ordinateur à code de programme d'ordinateur, qui ordonne à un système informatique destiné à la fabrication d'une prothèse dentaire (17) comprenant une armature (3) et une facette (15) de mettre en oeuvre un procédé (100, 200, 300) selon l'une quelconque des revendications 1 à 14, lorsque le programme d'ordinateur est exécuté sur le système informatique.
